# EUROPÄISCHE PATENTSCHRIFT

(11) **EP 1 980 441 B1**
(45) Veröffentlichungstag und Bekanntmachung des Hinweises auf die Patenterteilung: **12.05.2010**
(21) Anmeldenummer: 08006284.7
(22) Anmeldetag: 31.03.2008
(51) Int. Cl.: B60K 20/02, B62D 1/12, B60K 26/02

(54) **Steuerknüppel für ein Fahrzeug**
Control lever for a vehicle
Levier de commande pour un véhicule

(30) Priorität: 12.04.2007 DE 102007018246
(43) Veröffentlichungstag der Anmeldung: 15.10.2008
(73) Patentinhaber: Kässbohrer Geländefahrzeug AG, 88471 Laupheim (DE)
(72) Erfinder: Mack, Franz, 88457 Kirchdorf (DE)
(74) Vertreter: Patentanwälte Ruff, Wilhelm, Beier, Dauster & Partner

(56) Entgegenhaltungen:
- WO-A-2006/104440
- DE-A1-102005 014 774
- DE-U1- 20 107 719
- GB-A- 2 165 664
- US-A1- 2002 157 284
- US-A1- 2006 053 926

## Beschreibung

### Anwendungsgebiet und Stand der Technik

Die Erfindung betrifft ein Fahrzeug, insbesondere ein Kettenfahrzeug, mit einem Handsteuergerät zur Steuerung von Fahrfunktionen des Fahrzeugs und/oder Zusatzfunktionen des Fahrzeugs, wobei das Handsteuergerät eine Basis und einen gegenüber der Basis beweglichen Griff aufweist, der zum Zweck der Steuerung mindestens um eine im Wesentlichen horizontalen Schwenkachse schwenkbar ausgebildet ist.

Ein derartiges Handsteuergerät ist im Zusammenhang mit Kettenfahrzeugen aus der DE 10 2005 017 013 A1 bekannt. Die dort beschriebene Handsteuereinheit wird im Betrieb von einer Hand des Fahrzeugführers umfasst, wobei die Bedienung dann zum einen über Steuerelemente, beispielsweise Knöpfe oder Rändelräder am Griff, und andererseits über ein Verkippen des Griffs in seiner Gesamtheit möglich ist.

Die Freiheitsgrade, um die der Griff bei Handsteuergeräten gattungsgemäßer Fahrzeuge bewegbar ist, sind üblicherweise Schwenkbewegungsfreiheitsgrade um in Fahrzeuglängsrichtung oder Fahrzeugquerrichtung ausgerichtete Schwenkachsen.

Aus der US 2002/0157284 A1 ist ein Fahrzeug nach dem Oberbegriff von Anspruch 1 bekannt.

### Aufgabe und Lösung

Aufgabe der Erfindung ist es, ein gattungsgemäßes Fahrzeug im Hinblick auf das Handsteuergerät unter den Gesichtspunkten der Ergonomie sowie der Sicherheit weiterzubilden.

Diese Aufgabe wird durch ein Fahrzeug nach Anspruch 1gelöst.

Die Schwenkbarkeit des Griffs um die im Wesentlichen vertikale Schwenkachse wird für analog einzustellende Parameter der Fahr- oder Zusatzfunktionen, beispielsweise der Fahrrichtung, der Fahrgeschwindigkeit oder dem Schwenkwinkel von Anbauvorrichtungen wie Räumschildern und ähnlichem, benutzt. Bei den aus dem Stand der Technik bekannten Handsteuergeräten werden üblicherweise zwei orthogonal zueinander stehende und im Wesentlichen horizontal ausgerichtete Schwenkachsen benutzt. Durch die Schwenkbarkeit des Griffs um eine weitere, im Wesentlichen vertikale Schwenkachse kann eine weitere Funktion hinzugefügt werden, ohne dass es hierfür einer Doppelbelegung einer der horizontalen Schwenkachsen bedarf.

Die Schwenkbarkeit des Griffs um die vertikale Schwenkachse ist vorzugsweise so geartet, dass der Griff durch eine Rückstellkraft stets zurück in einer Ruheausrichtung gedrückt wird.

Erfindungsgemäss ist eine mit dem Handsteuergerät verbundene Steuereinheit vorgesehen, welche zur Auswertung einer Schwenkstellung um die vertikale Schwenkachse dahingehend ausgebildet ist, dass Fahrfunktionen oder Zusatzfunktionen des Fahrzeugs gleichgerichtet mit der Schwenkstellung des Griffs um die vertikale Schwenkachse mittels am Steuergerät angeschlossener Aktuatoren und/oder Motoren beeinflusst werden. Die vertikale Schwenkachse des Griffs und die damit einhergehende Schwenkmöglichkeit kann dadurch in besonders intuitiver Art und Weise für Fahr- oder Zusatzfunktionen genutzt werden. Als Zusatzfunktion bieten sich z.B. die Einstellung der Ausrichtung eines Räumschildes oder aber die Bewegung eines Auslegers, beispielsweise eines Windenauslegers, an. Ein Verschwenken des Griffs um die vertikale Achse nach links hat dann ein ebenfalls nach links gerichtetes Verschwenken des Räumschildes oder des Auslegers zur Folge.

Die Aufgabe wird auch gelöst durch ein gattungsgemäßes Fahrzeug, welches über eine mit dem Handsteuergerät verbundene Steuereinheit verfügt, mittels derer Ausgangsdaten mindestens eines manuell bedienbaren Steuerelements und/oder Ausgangsdaten bezüglich einer Schwenkstellung des Griffs gegenüber der Basis verarbeitet werden, wobei das Steuergerät eine Zuordnung des Steuerelements und/oder der Schwenkstellung des Griffs zu einer Fahrfunktion und/oder Zusatzfunktion durch einen Benutzer gestattet. Dem Benutzer ist es demnach möglich, eine individuelle Zuordnung zu treffen, durch die festgelegt wird, in welcher Art und Weise eine Betätigung des Handsteuergeräts auf Fahrfunktionen und/oder Zusatzfunktionen des Fahrzeugs wirkt. So kann ein Fahrzeugführer beispielsweise Knöpfe, Rändelräder oder andere am Griff vorgesehene Steuerelemente mit den von ihm am häufigsten benötigten Informationen belegen. Weiterhin ist es ihm möglich, auch die Reaktion von Fahr- oder Zusatzfunktionen des Fahrzeugs flexibel mit Freiheitsgraden des Griffs gegenüber der Basis zu verknüpfen. Eine Vielzahl weiterer darüber hinausgehender Funktionen ist in diesem Zusammenhang weiterhin möglich, wie beispielsweise die Doppelbelegung von Funktionen, so dass das Verschwenken des Griffs in Abhängigkeit der dabei gleichzeitig gedrückten Tasten verschiedene Funktionen ausführen kann. Die Steuereinheit weist vorzugsweise einen Speicher auf, in dem die Zuordnungen permanent abgelegt werden können. Auf die so abgelegten Zuordnungstabellen greift die Steuereinheit dann zu, um einen vom Handsteuergerät kommenden Steuerbefehl mittelbar in eine Aktuatoren- oder Motorenbewegung umzusetzen. Die flexible Zuordnung gestattet es auch, mehrere Zuordnungsprofile im Speicher der Steuereinheit anzulegen, die für mehrere Fahrzeugführer jeweils bevorzugte Einstellungen umfassen.

Bei der Erfindung weist das Steuergerät eine Ausgabeeinrichtung auf, vorzugsweise einen Kontrollmonitor, über die Ausgangsdaten des Handsteuergeräts sowie vorzugsweise die jeweils zugeordneten Fahrfunktionen bzw. Zusatzfunktionen wiedergegeben und dargestellt werden. Diese Ausgabeeinrichtung erleichtert die Zuordnung der Fahrfunktionen und/oder der Zusatzfunktionen zu den verschiedenen Steuerelementen und Freiheitsgraden des Griffs. Der Fahrzeugführer hat beim Einstellen der Zuordnungen einen Überblick darüber, wie die gegenwärtige Belegung der verschiedenen Steuerelemente und Freiheitsgrade des Griffs geartet ist und kann darauf Einfluss nehmen.

Dabei wird das Steuergerät in ein Kontrollmodus überführt, in dem eine Betätigung des Handsteuergeräts durch die Ausgabeeinrichtung wiedergegeben wird, jedoch die Fahrfunktion bzw. die Zusatzfunktionen nicht beeinflusst. Dies ist bei der Einstellung der Steuerelemente und Freiheitsgrades des Griffs besonders zweckmäßig. Es erlaubt dem Bediener quasi eine Simulation seiner Bedienung, bei der er unmittelbar erkennen kann, welche Fahr- bzw. Zusatzfunktion von seiner gegenwärtigen Betätigung beeinflusst wird. Besonders vorteilhaft ist es dabei, wenn die Ausgabeeinrichtung in grafischer Art und Weise anhand einer Abbildung des Fahrzeugs oder von Teilen davon erkennbar macht, wie die Beeinflussung des Fahrzeugs durch die jeweilige Betätigung aussehen würde. Der Kontrollmodus ist auch zur Fehlersuche zweckmäßig, da er es in einfacher Art und Weise gestattet, die Funktionstüchtigkeit des Handsteuergeräts zu überprüfen.

Bei einer Weiterbildung der Erfindung ist das Handsteuergerät über ein Bus-System, vorzugsweise über einen CAN-Bus, mit der Steuereinheit verbunden. Dies gestattet die Verwendung weit verbreiteter Komponenten, was in wirtschaftlicher Hinsicht von Vorteil ist. Weiterhin ist es hierdurch in einfacher Art und Weise möglich, auf zukünftige Entwicklungen vorbereitet zu sein, ohne dabei beispielsweise durch die Anzahl der verfügbaren Leitungen zwischen Handsteuergerät und Steuereinheit beschränkt zu werden.

Bei einer Weiterbildung der Erfindung weist der Griff eine Berührzone zum Umfassen mit einer Handinnenfläche und das Handsteuergerät mindestens ein Berührungssensor auf, der zur Ermittlung einer Berührung des Griffs durch einen Fahrzeugführer ausgebildet ist.

Der Berührungssensor ist dahingehend ausgebildet, dass er die Information, ob der Griff des Handsteuergeräts von einem Fahrzeugführer umfasst wird, für eine elektronische Auswertung zugänglich macht. Diese Information kann auf vielfältige Arten genutzt werden. Sie gestattet es, bestimmte Fahrzeugfunktionen davon abhängig zu machen, ob der Fahrzeugführer gerade in der Lage ist, unmittelbar in die Fahrzeugfunktionen einzugreifen. Ist dies nicht der Fall, was durch das Nichtdetektieren einer Berührung erkennbar ist, so können sicherheitskritische Funktionen des Fahrzeugs deaktiviert oder anderweitig beeinflusst werden. Darüber hinaus kann eine solche Berührung beispielsweise auch verwendet werden, um Fahrfunktionen oder Zusatzfunktionen des Fahrzeugs in einen Bereitschaftsmodus zu überführen, da eine eintretende Berührung durch den Fahrzeugführer signalisiert, dass eine Betätigung des Handsteuergeräts in unmittelbarer Zukunft zu erwarten ist.

Es ist eine Vielzahl von möglichen Ausgestaltungen bezüglich des Berührungssensors denkbar und von der Erfindung umfasst. Als Berührungssensor im Zusammenhang mit der Erfindung werden jegliche Sensoren begriffen, die schon das reine Vorhandensein der Hand des Fahrzeugführers auf dem Griff des Handsteuergeräts erkennbar machen, ohne dass darüber hinausgehende Steuerfunktion durch den Fahrzeugführer betätigt werden muss. Insbesondere zweckmäßig sind Sensoren, die unmittelbar im Bereich der Berührzone angeordnet sind. Solche Sensoren können so geartet sein, dass sie ohne Krafteinwirkung durch die Hand schon einen für eine Berührung charakteristischen Signalwert ausgeben. Zweckmäßige Messgröße kann dabei ein elektrischer Widerstand sein, der durch die Körperwärme oder den elektrischen Widerstand der Haut an der Handinnenfläche beeinflusst wird. Auch kapazitive Sensoren sind als Berührungssensoren gut verwendbar. Ebenfalls zweckmäßig sind Sensoren, die auf eine vom Fahrzeugführer verursachte Krafteinwirkung reagieren. So können beispielsweise Drucksensoren an der Oberfläche des Griffs zuverlässig erkennen, ob der Griff durch die Hand des Fahrzeugführers fest umschlossen ist.

Besonders bevorzugt sind Ausgestaltungen, bei denen mehrere, insbesondere verschiedene Berührungssensoren vorhanden sind, deren Ausgangssignale gemeinsam ausgewertet werden, so dass auch im Falle eine Ausfalls eines Berührungssensor oder im Falle spezieller Randbedingungen, die prinzipbedingt einen Berührungssensor wirkungslos machen, eine zuverlässige Erkennung einer Berührung möglich bleibt.

Bei einer bevorzugten Weiterbildung weist der Griff einen kugelartig gewölbten Zentralabschnitt zur ergonomischen Auflage einer Handinnenfläche auf, der eine obere Scheitelfläche des Griffs bildet. Ein solcher Griff ist besonders ermüdungsfrei zu betätigen, da es keiner Muskelanspannung bedarf, um den Griff kontinuierlich zu berühren. Er ist insoweit einem konventionellen Schaltknüppel gegenüber vorteilhaft, da ein solcher permanent umfasst werden muss. Bei einem Griff mit einem kugelartig gewölbten Zentralabschnitt ist der Berührungssensor vorzugsweise im Bereich des Zentralabschnitts vorgesehen, da hier die Handinnenfläche aufliegt, die üblicherweise während der Bedienung des Fahrzeugs nicht vom Griff entfernt wird.

Der Berührungssensor kann vorteilhaft auch als Kraft- oder Drucksensor ausgebildet sein, der zur Messung einer in Fahrzeughochrichtung auf den Griff wirkenden Kraft oder eines in Fahrzeughochrichtung auf den Griff wirkenden Drucks ausgebildet ist. Eine solche Ausgestaltung des Berührungssensors hat den Vorteil, dass sie unabhängig davon ist, ob gegebenenfalls aufgrund von der Verwendung von Handschuhen oder aufgrund von kühler Witterung das Vorhandensein der Hand des Bedieners über eine Änderung des elektrischen Widerstands in Folge der Körpertemperatur nicht zuverlässig möglich ist. Ein solcher Kraft- oder Drucksensor ist insbesondere bei Griffen vorteilhaft, bei denen aufgrund ihrer Formgebung vorgesehen ist, dass die Hand des Bedieners in einer Art und Weise aufliegt, die im Betrieb zu einer permanenten oder annähernd permanenten Kraftbeaufschlagung des Griffs in Fahrzeughochrichtung nach unten erfolgt. Ein entsprechender Kraft- oder Drucksensor kann unmittelbar im Bereich der Berührfläche vorgesehen sein. Es sind jedoch auch Ausgestaltungen denkbar und von der Erfindung umfasst, bei denen der Kraft- bzw. Drucksensor an einem anderen Ort, beispielsweise an einem Schaft des Griffs, vorgesehen ist.

Bei einer Weiterbildung der Erfindung weist das Fahrzeug eine mit dem Handsteuergerät verbundene Steuereinheit auf, welche zur Verarbeitung von Ausgangsdaten des Handsteuergeräts derart ausgebildet ist, dass die Ausgangsdaten des Handsteuergeräts in Abhängigkeit von Sensordaten des Berührungssensors in Steuersignale für am Steuergerät angeschlossene Aktuatoren und/oder Motoren des Fahrzeugs umgesetzt werden.

Die Steuereinheit verarbeitet demnach zum einen die Ausgangsdaten des Handsteuergeräts, die eine Steuerung von Fahr- oder Zusatzfunktionen des Fahrzeugs gerichtet sind, und zum anderen die Sensordaten des Berührungssensors. Dies ermöglicht eine besonders sichere Bedienung des Fahrzeugs. So ist bei einer Auswertung dahingehend, dass Aktuatoren bzw. Motoren des Fahrzeugs nur dann betätigt werden, wenn der Berührungssensor oder die Berührungssensoren eine Berührung signalisieren, gewährleistet, dass beispielsweise durch einen ungewollt in einer verschwenkten Stellung verbliebenen Griff nicht in unerwünschter Weise Fahrfunktionen ausgelöst oder beibehalten wird. Weiterhin kann auch eine ungenaue Kalibrierung des Griffs ausgeglichen werden, so dass bei entsprechender Konfiguration der Steuereinheit eine Auslenkung des Griffs aus einer Ruhelage nur dann in Steuersignale für die angeschlossenen Aktuatoren bzw. Motoren umgesetzt wird, sofern es sich entweder um eine erhebliche Auslenkung handelt oder aber um eine geringe Auslenkung bei gleichzeitigem positivem Signal des Berührungssensors handelt.

Eine Weiterbildung der Erfindung sieht vor, dass die Steuereinheit zur Überführung von an der Steuereinheit angeschlossene Aktuatoren und/oder Motoren in eine Ruhestellung für den Fall ausgebildet ist, dass der Berührungssensor keine Berührung ermittelt. Unter Ruhestellung ist in diesem Zusammenhang eine Stellung zu verstehen, die für Mensch und Maschine eine besonders geringe Gefahr darstellt. Bei Fahrfunktionen wird unter der Ruhestellung insbesondere ein Stillstand der Antriebsmotoren begriffen. Bei Zusatzfunktionen des Fahrzeugs, wie z.B. Winden oder Räumschildern, können auch von einer Stillstandsfunktion abweichende Funktionen als unter Sicherheitsaspekten bevorzugt angesehen werden. Die Überführung der Aktuatoren und/oder Motoren in einer Ruhestellung stellt eine Sicherheitsfunktion dar, die einerseits eingreift, wenn der Fahrzeugführer in einer Notfallsituation nicht mehr in der Lage ist, das Fahrzeug zu führen, die aber andererseits auch gezielt nutzbar ist, beispielsweise indem ein Fahrzeugführer bei einer sich ankündigenden problematischen Fahrsituation durch reflexartiges Loslassen des Griffs eine stabile Situation herstellt.

Ebenfalls zweckmäßig ist es, wenn die Steuereinheit zur Aufgabe eines Warnsignals für den Fall ausgebildet ist, dass der Berührungssensor keine Berührung ermittelt. Ein solches Warnsignal kann optisch oder bevorzugt akustisch ergehen. Es richtet sich insbesondere an den Fahrzeugführer selbst, der durch das Warnsignal aufgefordert wird, den Griff wieder zu umfassen. Er wird durch eine solche Ausgestaltung der Steuereinheit davon abgehalten, leichtfertig eine Gefahrensituation herbeizuführen, die sich daraus ergeben kann, dass er den Griff loslässt und somit die Reaktionszeit bei der Notwendigkeit eines Eingriffs in die Fahr- oder Zusatzfunktionen verlängert.

Bei einer Weiterbildung der Erfindung ist eine Grundstellung des Griffs, in der sich der Griff ohne äußere Kraftbeaufschlagung befindet, bezüglich der Lage und/oder der Ausrichtung einstellbar ausgebildet. Hierdurch wird es möglich, auf die besonderen Bedürfnisse eines Fahrzeugführers Rücksicht zu nehmen, indem die Ausrichtung oder die Lage des Griffs an seine persönlichen körperlichen Maße und an seine Wünsche angepasst werden kann. Insbesondere kann der Griff in seiner Gesamtheit translativ bewegbar sein oder so verschwenkbar sein, dass eine Haupterstreckungsrichtung des Griffs in einer Ruhelage ohne äußere Kraftbeaufschlagung in einer besonders angepassten Ausrichtung ist.

Besonders bevorzugt ist eine Ausführungsform, bei der dies dadurch erzielt wird, dass die Lage und/oder die Ausrichtung der Basis einstellbar ausgebildet ist. Bei einer solchen Ausgestaltung werden die Basis und der Griff gemeinsam bezüglich ihrer Lage oder Ausrichtung eingestellt, so dass es keiner Einstellmittel bedarf, die die Relativstellung von Griff und Basis zueinander verändern. Dies führt zu einer vergleichsweise einfachen Realisierbarkeit.

Bei einer Weiterbildung der Erfindung ist die Basis um eine Fahrzeugquerachse, um eine Fahrzeuglängsachse und/oder um eine Fahrzeughochachse schwenkbar und/oder entlang dieser Achsen translativ bewegbar ausgebildet und in einer Fixierlage arretierbar ausgebildet. Somit kann auf die individuellen Anforderungen des Fahrzeugführers in hohem Maße Rücksicht genommen werden. Die Arretierbarkeit gewährleistet, dass eine einmal eingestellte Einstellung beigehalten wird. Die Realisierung der Schwenkbarkeit und der Beweglichkeit ist über eine Vielzahl verschiedener Mittel erzielbar, beispielsweise über an der Basis vorgesehener Achsabschnitte, die in fahrzeugfeste Lagerungen eingreifen und so ein Verschwenken der Basis ermöglichen.

Bei einer Weiterbildung der Erfindung ist ein Schwenkbereich, innerhalb dessen der Griff um die im Wesentlichen horizontale Schwenkachse gegenüber der Basis schwenkbar ausgebildet ist, bezüglich der Endlage des Griffs einstellbar. Bei dieser Ausgestaltung ist kann die Basis fahrzeugfest ausgestaltet sein. Die individuelle Anpassung des Schwenkbereichs erfolgt durch Festlegen der Endlagen, die den Schwenkbereich begrenzen, und/oder der Ruhelage des Griffs.

### Kurzbeschreibung der Zeichnungen

Weitere Vorteile und Merkmale der Erfindung ergeben sich aus den Ansprüchen sowie der nachfolgenden Beschreibung eines bevorzugten Ausführungsbeispiels der Erfindung, das anhand der Zeichnungen dargestellt ist. Dabei zeigt:
- Fig. 1: in schematischer Darstellung ein vollständiges System, bestehend aus Handsteuergerät, Steuereinheit, visueller Ausgabeeinrichtung, akustischer Ausgabeeinrichtung, Eingabeeinrichtung und dem diese Komponenten enthaltenen Fahrzeug, und
- Fig. 2 bis 4: verschiedene dynamische und statische Freiheitsgrade des Handsteuergeräts.

### Detaillierte Beschreibung des Ausführungsbeispiels

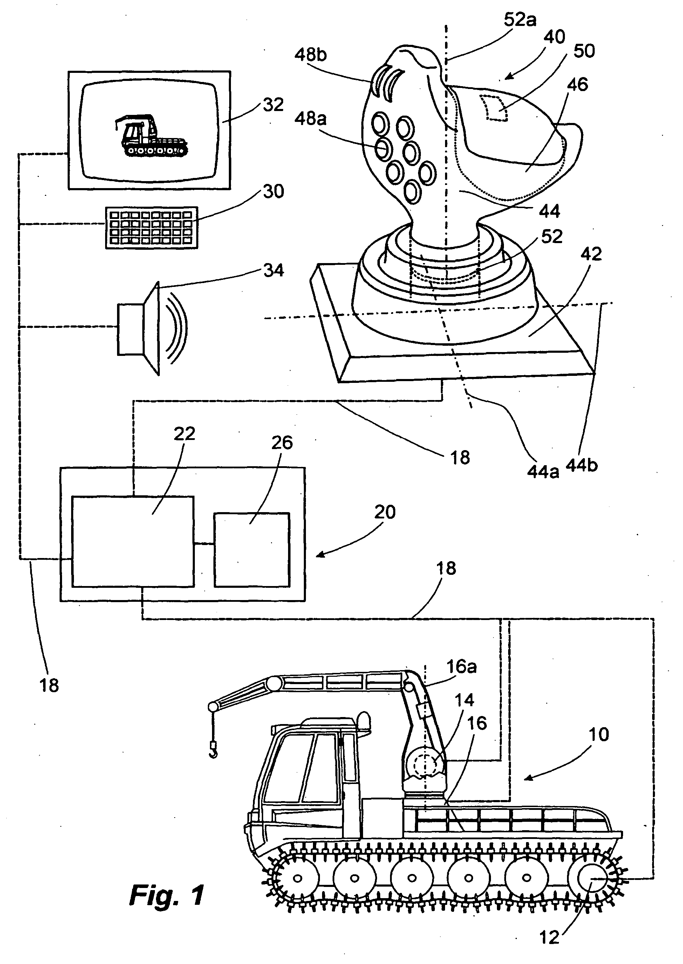

Fig. 1 zeigt eine schematische Darstellung eines erfindungsgemäßen Fahrzeugs 10 und dessen Steuersystems, bestehend aus einer Steuereinheit 20, einer Eingabeeinheit 30, einem Ausgabebildschirm 32, einem akustischen Signalgeber 34 sowie einem Handsteuergerät 40.

Das Kettenfahrzeug 10 verfügt über verschiedene Motoren und Aktuatoren, die zur Steuerung von Fahrfunktionen und Zusatzfunktionen genutzt werden. Nur beispielhaft genannt gehören hierzu Antriebsmotoren 12, über die der Kettenantrieb gesteuert wird, ein Windenmotor 14, über den das Kabel einer Winde auf- oder abgerollt werden kann, sowie ein Auslegermotor 16, der zur Steuerung der Ausrichtung eines für die Winde vorgesehenen Auslegers um die Achse 16a vorgesehen ist. Die Steuerung dieser Motoren 12, 14, 16 erfolgt durch die Steuereinheit 20, wobei die Signalverbindung über einen CAN-Bus 18 realisiert ist. Über den CAN-Bus ist ein Prozessor 22 der Steuereinheit 20 in der Lage, nicht dargestellte schaltbare Hydraulikventile zu anzusteuern, die die Funktion der als Hydraulikmotoren ausgebildeten Motoren 12, 14, 16 beeinflussen.

Ebenfalls mit der Steuereinheit 20 verbunden ist das Handsteuergerät 40. Das Handsteuergerät 40 weist eine Basis 42 und einen Griff 44 auf, wobei der Griff 44 gegenüber der Basis um horizontale Schwenkachsen 44a, 44b verschwenkbar ausgebildet ist. Am Griff sind verschiedene Steuerelemente 48 in Form von Knöpfen 48a und Rändelrädern 48b vorgesehen. Weiterhin weist der Griff eine Auflagefläche 46 auf, die ergonomisch an die Form einer aufliegenden Handinnenfläche eines Fahrzeugführers angepasst ist.

Die Einflussnahme des Fahrzeugführers auf das Handsteuergerät 40 in Form von Betätigungen der Schaltelemente 48a, 48b und in Form von Veränderungen der Schwenkwinkel des Griffs 44 gegenüber der Basis 42 werden über den CAN-Bus 18 an den Prozessor 24 der Steuereinheit 20 signalisiert.

Neben den Motoren 12, 14, 16 des Fahrzeugs 10 sowie dem Handsteuergerät 40 sind auch ein Eingabetastenfeld 30, ein akustischer Signalgeber 34 und ein Ausgabebildschirm 32 mit der Steuereinheit 20 verbunden. Diese Ein- und Ausgabegeräte 30, 32, 34 sind jeweils im Führerhaus des Fahrzeugs 10 im Bereich des Fahrersitzes vorgesehen.

Die Zuordnung der Betätigung der verschiedenen Steuerelemente 48a, 48b sowie der Bewegung des Griffs 44 gegenüber der Basis 42 zu einzelnen Fahr- oder Zusatzfunktionen ist flexibel und kann vom Fahrzeugführer angepasst werden. So kann der Fahrzeugführer frei festlegen, welche Steuerelemente 48a, 48b und welcher Freiheitsgrad des Griffs einer jeweiligen Funktion des Fahrzeugs 10 zugewiesen sind. Dies erlaubt zum einen eine Anpassung an individuelle Vorlieben des Fahrzeugführers und zum anderen auch eine Anpassung an den spezifischen Einsatzzweck, dem das Fahrzeug 10 dient. So ist es beispielsweise bei einem Pistenpflegefahrzeug die Windenfunktion so einstellbar, dass sie nur durch mehrere gleichzeitige oder aufeinanderfolgende Tastendrücke zugänglich ist. Dies ist zweckmäßig, sofern die Windenfunktion beim Anwendungsgebiet des konkreten Fahrzeugs 10 nur selten gebraucht wird, da die Einfachbetätigung der Tasten dann mit wichtigeren Funktionen belegt werden können. Sollte das Fahrzeug 10 jedoch einem Zweck dienen, bei dem die Seilwinde im Einsatz häufig verwendet wird, ist eine einfachere Handhabung wünschenswert und über die flexible Zuordnungsfunktionalität erreichbar. Die Zuordnung der Steuerelemente 48a, 48b und Freiheitsgrade zu den einzelnen Funktionen des Fahrzeugs 10 erfolgt unter Zuhilfenahme des Bildschirms 32, auf dem der Fahrzeugführer jederzeit beim Vornehmen von Einstellungen über das Tastenfeld 30 und das Handsteuergerät 40 sehen kann, welche Zuordnungen gegenwärtig eingestellt sind. Besonders vorteilhaft ist es dabei, wenn diese Zuordnungen grafisch, beispielsweise anhand eines schematisch dargestellten Fahrzeugs verdeutlicht werden. Wenn der Fahrzeugführer die Einstellung ändert, so werden die neuen Einstellungen in einem Speicher 26 der Steuereinheit 20 abgelegt.

In Betrieb werden die Steuerinformationen, die die Steuereinheit 20 vom Handsteuergerät 40 erhält, mittels des Prozessors 22 und anhand der im Speicher 26 abgelegten Zuordnungsdaten den verschiedenen Fahr- und Zusatzfunktionen des Fahrzeugs zugeordnet und die entsprechenden Motoren 10, 12, 14 bzw. Aktuatoren in der korrespondierenden Art und Weise betätigt.

Neben den Steuerelementen 48a, 48b und den Freiheitsgraden verarbeitet die Steuereinheit 20 auch Ausgangsdaten von Berührungssensoren 50, 52. Diese Berührungssensoren 50, 52 sind am Handsteuergerät 40 vorgesehen und dienen der Erkennung, ob der Fahrzeugführer jeweils gerade den Griff 44 des Handsteuergeräts 40 umfasst. Die Funktion des ersten Berührungssensors 50 beruht dabei auf einer Widerstandsmessung, wobei der Widerstand durch die Körpertemperatur des Fahrzeugführers beeinflussbar ist. Der zweite Berührungssensor 52 arbeitet nach einem anderen System. Er misst den Druck bzw. die Kraft, die in Richtung einer Hochachse 52a auf den Griff wirken. Die Ausgangssignale dieser Berührungssensoren 50, 52 werden ebenfalls von der Steuereinheit 20 verarbeitet, wobei verschiedene Verhaltensweisen in Abhängigkeit der Berührungssensoren 50, 52 verwirklicht sein können. So kann der Prozessor 22 derart programmiert sein, dass die Antriebsmotoren 12 nur dann laufen, wenn eine Berührung durch einen Fahrzeugführer detektiert wird. Entfällt diese Berührung, so werden die Antriebsmotoren 12 unmittelbar gestoppt. Ebenfalls zweckmäßig kann es sein, über die akustische Signaleinheit 34 einen Warnton auszugeben, sobald der Fahrzeugführer den Griff 44 loslässt.

Bei dem dargestellten Beispiel wird eine besonders sichere Detektierung durch das Vorhandensein zweier unterschiedlicher Berührungssensoren 50, 52 erreicht. Üblicherweise reicht jedoch ein Berührungssensor.

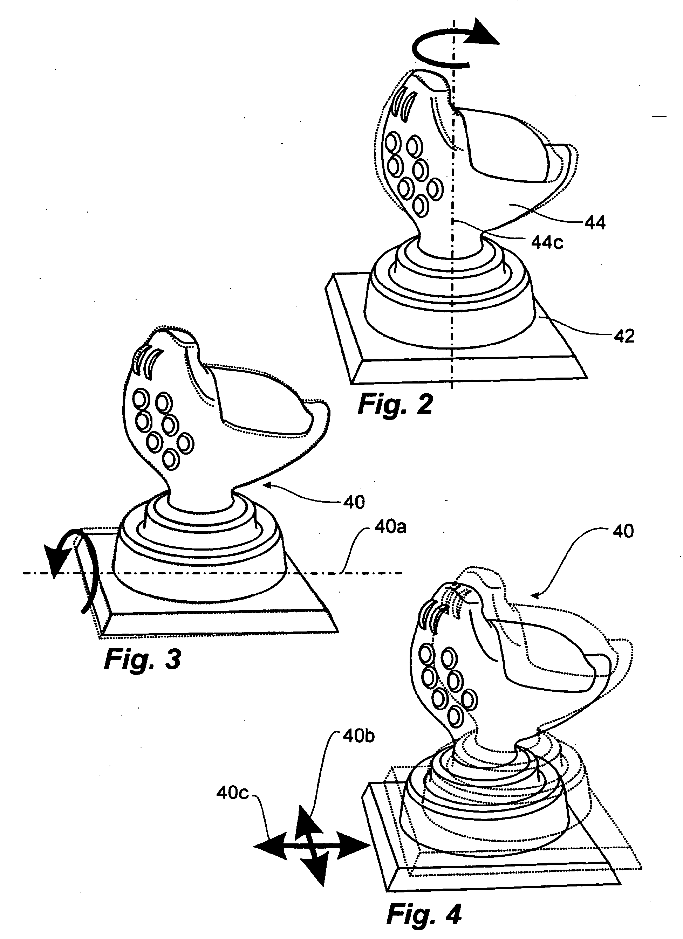

Fig. 2 zeigt einen weiteren Freiheitsgrad des Griffs 44 gegenüber der Basis 42. Der Griff wird dabei um eine vertikale Schwenkachse 44c gegenüber der Basis 42 verschwenkt. Dadurch wird neben der Verschwenkbarkeit um die Schwenkachsen 44a, 44b ein dritter über die Stellung des Griffs 44 manipulierbarer Freiheitsgrad erzielt. Dieser kann vorteilhaft dafür verwendet werden, Fahr- oder Zusatzfunktionen zu steuern, bei denen eine Auslenkung proportional zum Schwenkwinkel des Griffs um die Schwenkachse 44c erzielt wird. Beim Beispiel der Fig. 1 könnte vorzugsweise der Motor 16, der für die Ausrichtung des Auslegers um die Achse 16a verantwortlich ist, durch eine dahingehende Betätigung des Griffs 44 beeinflusst werden. Neben einem linearen Verhältnis zwischen dem Schwenkwinkel des Griffs 44 um die Schwenkachse 44c kann es auch vorteilhaft sein, die Laufgeschwindigkeit eines anhand dieses Freiheitsgrades gesteuerten Motors über den jeweiligen Schwenkwinkel zu steuern, so dass eine weitere Auslenkung um die Schwenkachse 44c eine schnelle Bewegung des zugeordneten Motors zur Folge hat und eine nur leichte Auslenkung des Griffs 44 um die Schwenkachse 44c eine langsame Motorbetätigung bewirkt.

Vorzugsweise sind innerhalb des Handsteuergeräts 40 nicht dargestellte Federmittel vorhanden, die den Griff um die Schwenkachse 44c stets in Richtung der Normalausrichtung der Fig. 1 kraftbeaufschlagen.

Die Fig. 3 und 4 zeigen Einstellmöglichkeiten des Handsteuergeräts 40 in seiner Gesamtheit. Diese dienen dazu, eine einen Fahrzeugführer angepasste Ausrichtung des Handsteuergeräts zu erzielen, die ihm eine besonders bequeme Steuerung ermöglichen. Bei diesen Einstellmöglichkeiten wird nicht nur der Griff 44, sondern die Basis 42 gemeinsam mit dem Griff 44 verstellt, so dass deren Relativposition zueinander durch die entsprechende Einstellung nicht beeinflusst wird. In der verstellten Stellung erfolgt dann eine Fixierung mittels nicht näher dargestellter Fixiermitteln, beispielsweise mittels Arretierschrauben oder Rastmitteln.

Fig. 3 zeigt eine Einstellbarkeit, die darauf gerichtet ist, das Handsteuergerät 40 in seiner Gesamtheit um eine Fahrzeugquerachse 40a zu verschwenken. Die gepunktete Darstellung stellt dabei die Ausgangslage dar, der gegenüber die mit durchgezogener Linie dargestellte Stellung einer entsprechend verstellte Einstellung darstellt, in der das Handsteuergerät 40 nach vorne verkippt ist.

Fig. 4 zeigt eine Einstellbarkeit in der Ebene, bei der das Handsteuergerät aus einer gepunktet dargestellten Ausgangslage in Fahrzeuglängsrichtung 40b und Fahrzeugquerrichtung 40c translativ verschoben wurde.

## Patentansprüche

1. Fahrzeug (10), insbesondere Kettenfahrzeug (10), mit einem Handsteuergerät (40) zur Steuerung von Fahrfunktionen des Fahrzeugs und/oder Zusatzfunktionen des Fahrzeugs, wobei das Handsteuergerät (40) eine Basis (42) und einen gegenüber der Basis (42) beweglichen Griff (44) aufweist, der zum Zwecke der Steuerung zumindest um eine im Wesentlichen horizontale Schwenkachse (44a, 44b) schwenkbar ausgebildet ist, wobei eine mit dem Handsteuergerät (40) verbundene Steuereinheit (20) vorgesehen ist, mittels derer Ausgangsdaten mindestens eines manuell bedienbaren Steuerelements (48a, 48b) und/oder Ausgangsdaten bezüglich einer Schwenkstellung des Griffs (44) gegenüber der Basis (42) verarbeitet werden,
**dadurch gekennzeichnet, dass**
die Steuereinheit (20) eine Zuordnung des Steuerelements (48a, 48b) und/oder der schwenkstellung des Griffs (44) zu einer Fahrfunktion und/oder Zusatzfunktion durch einen Benutzer gestattet, wobei die Steuereinheit (20) eine Ausgabeeinrichtung (32), vorzugsweise einen Kontrollmonitor (32), aufweist, über die die Ausgangsdaten des Handsteuergeräts (40) sowie vorzugsweise die jeweils zugeordneten Fahrfunktionen bzw. Zusatzfunktionen wiedergegeben werden und wobei die Steuereinheit (20) in einen Kontrollmodus überführbar ist, in dem eine Betätigung des Handsteuergeräts (40) durch die Ausgabeeinrichtung (32) wiedergegeben wird, jedoch die Fahrfunktionen bzw. Zusatzfunktionen nicht beeinflusst.

2. Fahrzeug nach Anspruch 1,
**dadurch gekennzeichnet, dass**
der Griff (44) zum Zwecke der Steuerung gegenüber der Basis (42) um eine im Wesentlichen vertikale Schwenkachse (44c) schwenkbar ausgebildet ist.

3. Fahrzeug nach Anspruch 2,
**gekennzeichnet durch**
eine mit dem Handsteuergerät (40) verbundene Steuereinheit (20), welche zur Auswertung einer Schwenkstellung um die vertikale Schwenkachse (44c) dahingehend ausgebildet ist, dass Fahrfunktionen oder Zusatzfunktionen des Fahrzeugs gleichgerichtet mit der Schwenkstellung des Griffs (44) um die vertikale Schwenkachse (44c) mittels am Steuergerät (20) angeschlossener Aktuatoren und/oder Motoren (12, 14, 16) beeinflusst werden.

4. Fahrzeug nach einem der vorstehenden Ansprüche,
**dadurch gekennzeichnet, dass**
das Handsteuergerät (40) über ein Bus-System (18), vorzugsweise über einen CAN-Bus (18) mit der Steuereinheit (20) verbunden ist.

5. Fahrzeug nach einem der vorstehenden Ansprüche,
**dadurch gekennzeichnet, dass**
- der Griff (48a, 48b) eine Berührzone (46) zum Umfassen mit einer Handinnenfläche aufweist, und
- das Handsteuergerät (40) mindestens einen Berührungssensor (50, 52) aufweist, der zur Ermittlung einer Berührung des Griffs (44) durch einen Benutzer ausgebildet ist.

6. Fahrzeug nach Anspruch 5,
**dadurch gekennzeichnet, dass**
der Griff (44) einen kugelartig gewölbten Zentralabschnitt zur ergonomischen Auflage einer Handinnenfläche aufweist, der eine obere Scheitelfläche des Griffs (44) bildet.

7. Fahrzeug nach Anspruch 5 oder 6,
**dadurch gekennzeichnet, dass**
der Berührungssensor (50) im Bereich der Berührzone, insbesondere im Bereich des Zentralabschnitts, angeordnet ist.

8. Fahrzeug nach einem der Ansprüche 5 bis 7,
**dadurch gekennzeichnet, dass**
der Berührungssensor (50) als Temperatursensor ausgebildet ist.

9. Fahrzeug nach einem der Ansprüche 5 bis 8,
**dadurch gekennzeichnet, dass**
der Berührungssensor (52) ein Kraftsensor oder ein Drucksensor ist, der zum Messen einer in Fahrzeughochrichtung (52a) auf den Griff (44) wirkende Kraft oder eines in Fahrzeughochrichtung (52a) auf den Griff (44) wirkenden Drucks ausgebildet ist.

10. Fahrzeug nach einem der vorstehenden Ansprüche,
**gekennzeichnet durch**
eine mit dem Handsteuergerät (40) verbundene Steuereinheit (20), welche zur Verarbeitung von Ausgangsdaten des Handsteuergeräts (40) derart ausgebildet ist, dass die Ausgangsdaten des Handsteuergeräts in Abhängigkeit von Sensordaten des Berührungssensors (50, 52) in Steuersignale für am Steuergerät (20) angeschlossene Aktuatoren und/oder Motoren (12, 14, 16) des Fahrzeugs (10) umgesetzt werden.

11. Fahrzeug nach Anspruch 10,
**dadurch gekennzeichnet, dass**
die Steuereinheit (20) zur Überführung von an der Steuereinheit (20) angeschlossenen Aktuatoren und/oder Motoren (12, 14, 16) in eine Ruhestellung für den Fall ausgebildet ist, dass der Berührungssensor (50, 52) keine Berührung ermittelt.

12. Fahrzeug nach Anspruch 10 oder 11,
**dadurch gekennzeichnet, dass**
die Steuereinheit (20) zur Ausgabe eines Warnsignals für den Fall ausgebildet ist, dass der Berührungssensor (50, 52) keine Berührung ermittelt.

13. Fahrzeug nach einem der vorstehenden Ansprüche,
**dadurch gekennzeichnet, dass**
eine Grundstellung des Griffs (44), in der sich der Griff (44) ohne äußere Kraftbeaufschlagung befindet, bzgl. der Lage und/oder der Ausrichtung einstellbar ausgebildet ist.

14. Fahrzeug nach Anspruch 13,
**dadurch gekennzeichnet, dass**
die Lage und/oder die Ausrichtung der Basis (42) einstellbar ausgebildet ist.

15. Fahrzeug nach Anspruch 13 oder 14,
**dadurch gekennzeichnet, dass**
die Basis (42) um eine Fahrzeugquerachse (40b), um eine Fahrzeuglängsachse und/oder um eine Fahrzeughochachse schwenkbar oder translativ bewegbar ist und in einer Fixierlage arretierbar ausgebildet ist.

16. Fahrzeug nach Anspruch 15,
**dadurch gekennzeichnet, dass**
ein Schwenkbereich, innerhalb dessen der Griff um die im Wesentlichen horizontale Schwenkachse gegenüber der Basis schwenkbar ausgebildet ist, bezüglich der Endlagen des Griffs einstellbar ist.

## Claims

1. Vehicle (10), in particular a tracked vehicle (10) having a control lever (40) for controlling driving functions of the vehicle and/or additional functions of the vehicle, where the control lever (40) has a base (42) and a handle (44) movable relative to the base (42) and designed swivelable at least about a substantially horizontal swivel axis (44a, 44b) for control purposes, wherein a control unit (20) connected to the control lever (40) is provided with which output data of at least one manually operable control element (48a, 48b) and/or output data relating to a swivel position of the handle (44) relative to the base (42) are processed,
**characterized in that**
the control unit (20) permits an assignment of the control element (48a, 48b) and/or of the swivel position of the handle (44) to a driving function and/or an additional function by a user, wherein the control unit (20) has an output device (32), preferably a control monitor (32) using which the output data of the control lever (40) and preferably the respectively assigned driving functions / additional functions are reproduced and wherein the control unit (20) can be changed over to a checking mode in which an actuation of the control lever (40) is reproduced by the output device (32), however the driving functions / additional functions are not affected.

2. Vehicle according to Claim 1,
**characterized in that**
the handle (44) is designed swivelable about a substantially vertical swivel axis (44c) relative to the base (42) for the purpose of control.

3. Vehicle according to Claim 2,
**characterized by**
a control unit (20) connected to the control lever (40) and designed for evaluation of a swivel position about the vertical swivel axis (44c) such that driving functions or additional functions are influenced by actuators and/or motors (12, 14, 16) connected to the control unit (20) in alignment with the swivel position of the handle (44) about the vertical swivel axis (44c).

4. Vehicle according to one of the preceding claims,
**characterized in that**
the control lever (40) is connected by a bus system (18), preferably a CAN bus (18), to the control unit (20).

5. Vehicle according to one of the preceding claims,
**characterized in that**
- the handle (48a, 48b) has a contact zone (46) for gripping by the palm of the hand and
- the control lever (40) has at least one contact sensor (50, 52) designed for detecting contact with the handle (44) by a user.

6. Vehicle according to Claim 5,
**characterized in that**
the handle (44) has a central section with a spherical curve for ergonomic support of the palm of a hand and forming an upper apex of the handle (44).

7. Vehicle according to Claim 5 or 6,
**characterized in that**
the contact sensor (50) is arranged in the area of the contact zone, in particular in the area of the central section.

8. Vehicle according to one of Claims 5 to 7,
**characterized in that**
the contact sensor (50) is designed as a temperature sensor.

9. Vehicle according to one of Claims 5 to 8,
**characterized in that**
the contact sensor (52) is a force sensor or a pressure sensor designed for measuring of a force acting on the handle (44) in the vehicle vertical direction (52a) or of a pressure acting on the handle (44) in the vehicle vertical direction (52a).

10. Vehicle according to one of the preceding claims,
**characterized by**
a control unit (20) connected to the control lever (40) and designed for processing output data of the control lever (40) such that the output data of the control lever are converted, depending on sensor data of the contact sensor (50, 52), into control signals for actuators and/or motors (12, 14, 16) of the vehicle (10) connected to the control unit (20).

11. Vehicle according to Claim 10,
**characterized in that**
the control unit (20) is designed for changing over actuators and/or motors (12, 14, 16) of the vehicle (10) connected to the control unit (20) to a rest position for the event that the contact sensor (50, 52) does not detect any contact.

12. Vehicle according to Claim 10 or 11,
**characterized in that**
the control unit (20) is designed for emitting a warning signal for the event that the contact sensor (50, 52) does not detect any contact.

13. Vehicle according to one of the preceding claims,
**characterized in that**
a basic setting of the handle (44) in which the handle (44) is not being subjected to any external force is designed adjustable with regard to the position and/or the orientation.

14. Vehicle according to Claim 13,
**characterized in that**
the position and/or the orientation of the base (42) are designed adjustable.

15. Vehicle according to Claim 13 or 14,
**characterized in that**
the base (42) can be moved swivelably or translatively about a vehicle transverse axis (40b), about a vehicle longitudinal axis and/or about a vehicle vertical axis and is designed lockable in a fixing position.

16. Vehicle according to Claim 15,
**characterized in that**
a swivel range within which the handle is designed swivelable relative to the base and about the substantially horizontal swivel axis is adjustable with regard to the end positions of the handle.

## Revendications

1. Véhicule (10), en particulier véhicule à chenilles (10), comportant un boîtier de commande manuel (40) pour la commande de fonctions de conduite du véhicule et/ou de fonctions supplémentaires du véhicule, sachant que le boîtier de commande manuel (40) présente une base (42) et une poignée (44) mobile par rapport à la base (42), laquelle poignée est, à des fins de commande, conçue de manière à pouvoir pivoter au moins autour d'un axe de pivotement (44a, 44b) essentiellement horizontal, sachant qu'est prévue une unité de commande (20) reliée au boîtier de commande manuel (40) au moyen de laquelle sont traitées des données de sortie d'au moins un élément de commande (48a, 48b) utilisable manuellement et/ou des données de sortie relatives à une position de pivotement de la poignée (44) par rapport à la base (42),
**caractérisé en ce que**
l'unité de commande (20) permet à un utilisateur d'attribuer l'élément de commande (48a, 48b) et/ou la position de pivotement de la poignée (44) à une fonction de conduite et/ou à une fonction supplémentaire, sachant que l'unité de commande (20) présente un dispositif de sortie (32), de préférence un écran de contrôle (32), au moyen duquel les données de sortie du boîtier de commande manuel (40) ainsi que, de préférence, les fonctions de conduite ou les fonctions supplémentaires respectivement attribuées peuvent être affichées, et que l'unité de commande (20) peut être mise en mode de contrôle, dans lequel un actionnement du boîtier de commande manuel (40) est affiché par l'unité de sortie (32) sans agir cependant sur les fonctions de conduite ou les fonctions supplémentaires.

2. Véhicule selon la revendication 1,
**caractérisé en ce que**
que la poignée (44) est, pour la commande, conçue de manière à pouvoir pivoter par rapport à la base (42) autour d'un axe de pivotement (44c) essentiellement vertical.

3. Véhicule selon la revendication 2,
**caractérisé par**
une unité de commande (20) reliée au boîtier de commande manuel (40), qui, pour évaluer une position de pivotement autour de l'axe de pivotement (44c) vertical, est conçue de telle façon que des fonctions de conduite ou des fonctions supplémentaires du véhicule conjuguées à la position de pivotement de la poignée (44) autour de l'axe de pivotement (44c) vertical sont influencées au moyen d'actionneurs et/ou de moteurs (12, 14, 16) raccordés à l'unité de commande (20).

4. Véhicule selon l'une des revendications précédentes,
**caractérisé en ce que**
le boîtier de commande manuel (40) est relié à l'unité de commande (20) par l'intermédiaire d'un système de bus (18), de préférence par l'intermédiaire d'un bus CAN (18).

5. Véhicule selon l'une des revendications précédentes,
**caractérisé en ce que**
- la poignée (48a, 48b) présente une zone de contact (46) destinée à être saisie par la paume d'une main, et
- le boîtier de commande manuel (40) présente au moins un capteur tactile (50, 52) conçu de manière à détecter un contact de la poignée (44) par un utilisateur.

6. Véhicule selon la revendication 5,
**caractérisé en ce que**
la poignée (44) présente une section centrale arrondie de type sphérique offrant une surface d'appui ergonomique pour la paume de la main, laquelle section forme une surface de sommet supérieure de la poignée (44).

7. Véhicule selon la revendication 5 ou 6,
**caractérisé en ce que**
le capteur tactile (50) est disposé dans la partie de la zone de contact, en particulier dans la partie de la section centrale.

8. Véhicule selon l'une des revendications 5 à 7,
**caractérisé en ce que**
le capteur tactile (50) est conçu sous forme de capteur de température.

9. Véhicule selon l'une des revendications 5 à 8,
**caractérisé en ce que**
le capteur tactile (52) est un capteur de force ou un capteur de pression conçu pour mesurer une force agissant sur la poignée (44) dans le sens de la hauteur du véhicule (52a) ou une pression agissant sur la poignée (44) dans le sens de la hauteur du véhicule (52a).

10. Véhicule selon l'une des revendications précédentes,
**caractérisé par**
une unité de commande (20) reliée au boîtier de commande manuel (40) qui, pour le traitement de données de sortie du boîtier de commande manuel (40), est conçue de telle manière que les données de sortie du boîtier de commande manuel sont converties, en fonction des données du capteur tactile (50, 52), en signaux de commande pour des actionneurs et/ou moteurs (12, 14, 16) du véhicule (10) reliés au boîtier de commande (20).

11. Véhicule selon la revendication 10,
**caractérisé en ce que**
l'unité de commande (20) est conçue de manière à conduire les actionneurs et/ou moteurs (12, 14, 16) reliés à l'unité de commande (20) en position de repos dans le cas où le capteur tactile (50, 52) n'identifie aucun contact.

12. Véhicule selon la revendication 10 ou 11,
**caractérisé en ce que**
l'unité de commande (20) est conçue de manière à émettre un signal d'avertissement dans le cas où le capteur tactile (50, 52) n'identifie aucun contact.

13. Véhicule selon l'une des revendications précédentes,
**caractérisé en ce que**
une position de base de la poignée (44), dans laquelle la poignée (44) se trouve lorsque aucune force n'est exercée, est conçue de manière à pouvoir être réglée en termes de position et/ou d'orientation.

14. Véhicule selon la revendication 13,
**caractérisé en ce que**
la position et/ou l'orientation de la base (12) est conçue de manière à pouvoir être réglée.

15. Véhicule selon la revendication 13 ou 14,
**caractérisé en ce que**
la base (42) peut être pivotée ou déplacée en translation autour d'un axe transversale (40b) du véhicule, autour d'un axe longitudinal du véhicule et/ou autour d'un axe vertical du véhicule, et est conçue de manière à pouvoir être arrêtée dans une position fixe.

16. Véhicule selon la revendication 15,
**caractérisé en ce que**
une section de pivotement, à l'intérieur de laquelle la poignée est conçue de manière à pouvoir pivoter par rapport à la base, autour de l'axe de pivotement essentiellement horizontal, peut être réglée quant aux positions finales de la poignée.
